(19) Europäisches Patentamt
European Patent Office
Office européen des brevets

(11) **EP 2 450 102 A1**

(12) **EUROPEAN PATENT APPLICATION**
published in accordance with Art. 153(4) EPC

(43) Date of publication:
**09.05.2012 Bulletin 2012/19**

(21) Application number: **10793944.9**

(22) Date of filing: **28.05.2010**

(51) Int Cl.:
**B01J 23/75** (2006.01)   **A61L 9/00** (2006.01)
**A61L 9/01** (2006.01)   **A61L 9/16** (2006.01)
**B01D 53/86** (2006.01)   **B01D 53/94** (2006.01)
**B01J 20/20** (2006.01)

(86) International application number:
**PCT/JP2010/059125**

(87) International publication number:
**WO 2011/001773 (06.01.2011 Gazette 2011/01)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **03.07.2009 JP 2009158819**

(71) Applicants:
• **Miyata, Seizo**
  **Nishitokyo-shi, Tokyo 202-0004 (JP)**
• **Kameyama, Hideo**
  **Tokyo 181-0001 (JP)**
• **Nisshinbo Holdings, Inc.**
  **Chuo-ku**
  **Tokyo 103-8650 (JP)**

(72) Inventors:
• **GUO Yu**
  **Koganei-shi**
  **Tokyo 184-0014 (JP)**
• **MIYATA Seizo**
  **Tokyo (JP)**
• **KAMEYAMA Hideo**
  **Tokyo (JP)**

(74) Representative: **Duckworth, Timothy John et al**
  **J A Kemp**
  **14 South Square**
  **Gray's Inn**
  **London WC1R 5JJ (GB)**

(54) **OXIDATION CATALYST, ABSORBENT, AND MATERIAL FOR PURGING HARMFUL SUBSTANCES**

(57)   An oxidation catalyst, comprising a carbon material prepared by calcining a transition metal compound and a nitrogen-containing organic substance, or a transition metal compound, a nitrogen-containing organic substance, and a carbon compound not containing nitrogen, the oxidation catalyst oxidizing at least one target substance selected from the group consisting of NO, CO, $NH_3$, and an aromatic hydrocarbon.

**Fig.3**

## Description

### Technical Field

The present invention relates to an oxidation catalyst, an adsorbent, and a material for purging harmful substances.

### Background Art

A variety of catalysts and adsorbents are used in order to remove harmful substances. For example, in Patent Literature 1, it is described that ammonia, which is a bad smell compound having a strong pungent odor, can be decomposed by a photocatalyst carrying a platinum compound.

### Citation List

### Patent Literature

Patent Literature 1: Japanese Patent Application Laid-Open Publication No. 2006-55747

### Summary of Invention

### Technical Problem

As described above, the catalyst that oxidizes harmful substances to remove the harmful substances often carries Pt in order to keep the oxidation activity of the catalyst high. However, Pt is very expensive, deposits ofPt are small, and resource is limited; accordingly, its stable supply for a long period of time may not be achieved.

Moreover, examples of an adsorbent that adsorbs and removes harmful substances include activated carbon; however, in order to produce activated carbon, an activating step to form a larger surface area is necessary after a carbonizing step.

Then, an object of the present invention is to provide an oxidation catalyst that can oxidize harmful substances without using Pt. Another object of the present invention is to provide an adsorbent that can adsorb harmful substances without being subjected to an activating step as in the case of activated carbon, and a material for purging harmful substances that can purge harmful substances.

### Solution to Problem

The present invention provides an oxidation catalyst comprising a carbon material prepared by calcining the following (i) or (ii), the oxidation catalyst oxidizing at least one of target substances (compounds to be oxidized) selected from the group consisting of NO, CO, $NH_3$, and aromatic hydrocarbons:

(i) a transition metal compound and a nitrogen-containing organic substance
(ii) a transition metal compound, a nitrogen-containing organic substance, and a carbon compound not containing nitrogen.

As the carbon material, in Japanese Patent Application Laid-Open Publication No. 2004-362802, it is shown that carbon alloy fine particles prepared by heat treating and grinding a phthalocyanine-containing furan resin can be used as a base material for an electrode for a fuel cell; however, it has newly been found that a carbon material prepared by calcining (i) or (ii) above has an oxidation action and is useful as an oxidation catalyst for NO, CO, $NH_3$, or an aromatic hydrocarbon.

It is preferable that the oxidation catalyst oxidizes the target substance at a temperature of not less than 10°C.

In the oxidation catalyst, an activity at a low temperature is high, and even in a low temperature environment of not less than 10°C, the oxidation catalyst can oxidize NO, CO, $NH_3$, or an aromatic hydrocarbon as the target substance.

Moreover, it is preferable that the oxidation catalyst oxidizes the aromatic hydrocarbons of the target substances above at a temperature of not less than 200°C.

At a temperature of not less than 200°C, the activity of the oxidation catalyst is improved, and the ability to oxidize the aromatic hydrocarbons becomes significantly higher.

In the oxidation catalyst, at least one load material selected from the group consisting of Pd, Rh, Ru, Ni, Co, Fe, Ce, Cu, Ti, Zr, Sn, V, Nb, Ta, Cr, Mo, W, Bi, Mn, and compounds thereof may be supported on the carbon material.

By carrying the load material, the activity of the oxidation catalyst is further improved, and the oxidation ability particularly for the aromatic hydrocarbons or the like is extremely good.

Moreover, the present invention provides an adsorbent comprising a carbon material prepared by calcining the following (i) or (ii), the adsorbent adsorbing at least one target substance (compound to be adsorbed) selected from the group consisting of NO, $NO_2$, formaldehyde, and acetaldehyde:

(i) a transition metal compound and a nitrogen-containing organic substance

(ii) a transition metal compound, a nitrogen-containing organic substance, and a carbon compound not containing nitrogen.

As described above, the carbon material has not only an oxidation action but also an adsorbing action, and is useful as an adsorbent for NO, $NO_2$, formaldehyde, or acetaldehyde.

It is preferable that the adsorbent adsorbs the target substance at a temperature of not less than 10°C.

In the adsorbent, the adsorbing ability at a low temperature is high, and even in a low temperature environment of not less than 10°C, the adsorbent can adsorb NO, $NO_2$, formaldehyde, or acetaldehyde as the target substance.

The present invention also provides a material for purging harmful substances comprising at least one of the oxidation catalyst and the adsorbent described above. In the present invention, the harmful substances include bad smell compounds. The oxidation catalyst and adsorbent according to the present invention are used as the material for purging harmful substances; thereby, the harmful substances can be purged with high efficiency.

**Advantageous Effects of Invention**

According to the present invention, an oxidation catalyst that can oxidize harmful substances without using Pt can be provided. Moreover, an adsorbent that can adsorb harmful substances without being subjected to an activating step as in the case of activated carbon. Thereby, a purging material that can remove harmful substances can be provided.

**Brief Description of Drawings**

[Figure 1 Figure 1 is a schematic view of an apparatus for measuring the concentration of NO, CO, $NH_3$, or an aromatic hydrocarbon.

[Figure 2] Figure 2 is a schematic view of a reaction tube in the measuring apparatus.

[Figure 3] Figure 3 is a drawing showing the concentration of NO or the like and adsorption and desorption behaviors of $NO_x$ in Example 1.

[Figure 4] Figure 4 is a drawing showing comparison of the conversion rates of CO at different temperatures in Example 2.

[Figure 5] Figure 5 is a drawing showing comparison of the conversion rates of $NH_3$ at different temperatures in Example 3.

[Figure 6] Figure 6 is a drawing showing comparison of the conversion rates of toluene at different temperatures in Example 4.

[Figure 7] Figure 7 is a drawing showing the concentration of NO or the like and adsorption and desorption behaviors of $NO_x$ in Comparative Example 1.

[Figure 8] Figure 8 is a drawing showing the concentration of NO or the like and adsorption and desorption behaviors of $NO_x$ in Comparative Example 2.

[Figure 9] Figure 9 is a drawing showing yield of $NO_2$ and the amount of $NO_x$ to be adsorbed on each purging material.

**Description of Embodiments**

Hereinafter, an embodiment of the present invention will be described. A carbon material that forms the oxidation catalyst or adsorbent according to the present embodiment is prepared by calcining the following (i) or (ii). Such a carbon material is a carbon alloy material in which the carbon skeleton is doped with nitrogen atoms, and a transition metal element is contained, and the activity is high.

(i) A transition metal compound and a nitrogen-containing organic substance

(ii) A transition metal compound, a nitrogen-containing organic substance, and a carbon compound not containing nitrogen

In production of the carbon material, calcining is performed using the (i) as a raw material in the case where the nitrogen-containing organic substance is not only a nitrogen source, but also sufficiently contains carbon as a carbon source; in the case where the carbon source is further needed, the (ii) is used as a raw material.

Here, the carbon compounds not containing nitrogen are not particularly limited; for example, celluloses, carboxymethyl celluloses, polyvinyl alcohol, polyacrylic acid, polyfurfuryl alcohol, furan resins, phenol resins, phenol formaldehyde resins, epoxy resins, pitch, general-purpose plastics such as polyvinylidene chloride and polymethacrylic acid, engineering plastics, super engineering plastics such as polysulfones, ionomer resins, or the like can be used. Inorganic substances such as coal can also be used. These compounds can be used alone, or two or more thereof can be used in combination. Among them, polymethacrylic acid is preferable from the viewpoint of cost and carbonization yield.

Moreover, as the nitrogen-containing organic substance, for example, pyrrole compounds such as polypyrrole, imide compounds such as a phthalocyanine complex, polyimides, and polycarbodiimide, amide compounds such as polyamides, imidazole compounds such as polyimidazole, lignin, biomass, poly(vinylpyridine), melamine resins, urea resins, chelate resins, humic acid, polyaniline, polyacrylonitrile, $\varepsilon$-caprolactam, protein, and the like can be used; among them, $\varepsilon$-caprolactam is preferable.

As a transition metal, elements that belong to the 4th Row of Group 3 to Group 12 on the periodic table can be used, and for example, cobalt (Co), iron (Fe), manganese (Mn), nickel (Ni), copper (Cu), titanium (Ti), chromium (Cr), and zinc (Zn) are preferable; as the transition metal compound, salts, hydroxides, oxides, nitrides, sulfides, carbides, complexes, and polymer complexes of the transition metals can be used, and among these, particularly, cobalt chloride, cobalt oxide, cobalt phthalocyanine, iron chloride, iron oxide, and iron phthalocyanine are preferable. Co, Fe, Mn, Ni, Cu, Ti, Cr, Zn, and compounds thereof improve the catalyst activity of the carbon catalyst.

The (i) or (ii) may be dissolved in a solvent and mixed to prepare a precursor composition. The solvent is not particularly limited as long as the solvent can dissolve these carbon compound not containing nitrogen, nitrogen-containing organic substance, and transition metal compound; for example, dimethylformamide, dimethylacetamide, dimethylsulfoxide, N-methylpyrrolidone, cyclohexanone, methyl ethyl ketone, and the like can be used.

It is also preferable that a carbon additive such as carbon black is added to the mixture of the (i) or (ii). By adding the carbon additive, the activity of the carbon material can be improved.

When the (i) or (ii) is calcined, in order to prevent contamination with impurities of the carbon material to be produced, it is preferable that calcination is performed in an inert atmosphere purged by nitrogen or the like.

Moreover, the produced carbon material can be powdered by a ball mill or the like, and formed into fine particles. Further, using sieves having different sizes of opening, coarse products are removed to provide uniform fine particles; thereby, the surface area of the carbon material is increased, and the activities as the oxidation catalyst, the adsorbent, and the material for purging harmful substances are improved.

It is preferable that the proportion of the carbon compound not containing nitrogen with respect to the nitrogen-containing organic substance to be blended is such that the amount of nitrogen atoms in the carbon material after calcining is not less than 0.5% by mass and not more than 20% by mass, and more preferably not less than 5% by mass and not more than 20% by mass based on the total mass of the carbon material.

The carbonization treatment of the (i), (ii), or precursor composition prepared by dissolving and mixing these in the solvent is performed preferably at 800 to 1000°C for 0.5 to 5 hours, and particularly preferably at 900°C to 1000°C for 0.5 to 2 hours.

Moreover, the carbon material may be doped with boron atoms and/or a chalcogen compound. In the carbon material doped with boron atoms and/or a chalcogen compound, the activity is improved compared to the carbon material doped with nitrogen atoms. In order for the carbon material to be doped with boron atoms and/or a chalcogen compound, for example, boric acid, boric acid salt, halogenated boric acid salt, or the like as a boron-containing organic substance and an oxide, a sulfide or the like as the chalcogen compound may be added to the mixture of the (i) or (ii).

The oxidation catalyst can oxidize NO even at room temperature. The temperature for oxidizing NO is preferably not less than 10°C, and if the temperature is not less than 10°C and not more than 25°C, the conversion rate is improved.

Moreover, at a temperature around 10°C, the oxidation catalyst can oxidize CO. The temperature to oxidize CO is preferably not less than 10°C; at a temperature of not less than 100°C, the activity is improved to improve the conversion rate of CO to $CO_2$; at a temperature of not less than 150°C, the conversion rate is further improved; at a temperature of not less than 200°C, the conversion rate reaches approximately 100%, and CO can be purged almost completely.

The oxidation catalyst can also oxidize $NH_3$ at around 10°C. The temperature to oxidize $NH_3$ is preferably not less than 10°C; at a temperature of not less than 100°C, the activity is improved to improve the conversion rate of $NH_3$; at a temperature of not less than 200°C, the conversion rate is further improved; at a temperature of not less than 400°C, the conversion rate reaches approximately 100%, and $NH_3$ can be purged almost completely.

Moreover, the oxidation catalyst can oxidize aromatic hydrocarbons such as benzene, toluene, and xylene in an oxidation atmosphere of preferably not less than 10°C, and more preferably not less than 200°C. At a temperature of not less than 250°C, the conversion rate of the aromatic hydrocarbon is improved; at a temperature of not less than 300°C, the conversion rate is further improved. At a temperature of not less than 350°C, the conversion rate reaches approximately 100%, and the hydrocarbon can be purged almost completely.

The relationship between the temperature and the conversion rate in oxidation of NO, CO, $NH_3$, or an aromatic hydrocarbon described above changes depending on the amount of the catalyst. Namely, by adjusting the amount of the catalyst, the oxidation ability can be improved, and the conversion rate can be improved at a lower temperature. For example, about CO, by adjusting the amount of the oxidation catalyst including the carbon material, CO can be oxidized and removed at normal temperature almost completely.

Moreover, the oxidation catalyst can oxidize and purge harmful substances other than NO, CO, $NH_3$, or an aromatic hydrocarbon described above, and also can oxidize hydrogen sulfide ($H_2S$) and mercaptan compounds, for example. About hydrogen sulfide, it is thought that sulfur produced after oxidation adsorbs to the surface of the carbon material; however, for example, by replacing the carbon material after a predetermined period of time, the carbon material can be used as the oxidation catalyst.

Further, the catalyst is not used not only for purging of the harmful substances, and also can purge NO, CO, $NH_3$, an aromatic hydrocarbon, or the like contained in other gas. For example, the catalyst is suitable for application as an oxidation catalyst that oxidizes a small amount of CO contained in hydrogen obtained by preforming natural gas or the like as a fuel for a fuel cell while the relevant oxygen is supplied; the oxidation catalyst is disposed in a CO removing apparatus for supplying gas to the fuel electrode of the fuel cell, or the oxidation catalyst is mixed with a fuel electrode catalyst of the fuel cell and used for the fuel electrode portion, thereby to be able to oxidize CO in hydrogen to $CO_2$ and prevent poisoning of an electrode catalyst.

In the oxidation catalyst, at least one load material selected from the group consisting of Pd, Rh, Ru, Ni, Co, Fe, Ce, Cu, Ti, Zr, Sn, V, Nb, Ta, Cr, Mo, W, Bi, Mn, and compounds thereof is supported on the carbon material; thereby, the oxidation activity of the target substance (particularly, aromatic hydrocarbons) can be improved. Particularly, if the load material is Pd or Rh, the oxidation activity becomes high; accordingly, Pd or Rh is preferable. Based on the mass of the carbon material, Pd or Rh is supported on the carbon material in a proportion of preferably 0.01 to 15% by mass, more preferably 0.1 to 10% by mass, and particularly preferably 0.5 to 2% by mass.

Here, in the case where Pd or Rh is supported on the carbon material, first, an aqueous solution of $PdCl_2$ containing Pd in a desired amount to be supported or $Rh(NO_3)_3$ containing Rh in a desired amount to be supported is prepared. The carbon material is mixed with the aqueous solution at room temperature, and the resultant is stirred for 1 to 5 hours. The aqueous solution is kept at 70 to 100°C for 10 to 20 hours, and the moisture content is vaporized. The carbon material thus obtained is sufficiently polished; thereby, a carbon material carrying Pd or Rh can be obtained. Moreover, in the case of the metal atom other than Pd and Rh, i.e., Ni or the like, an aqueous solution is prepared and mixed with the carbon material in the same manner; thereby, the metal atom can be supported on the carbon material. The amount of the metal atom or the like to be supported can be determined by simple calculation from the amount of a charged sample; in the case of analyzing with high accuracy, an ICP optical emission spectrometer or the like can be used.

Moreover, as described above, the carbon material also functions as the adsorbent that adsorbs harmful substances, and can adsorb, for example, $NO_x$ (NO, $NO_2$), formaldehyde, and acetaldehyde to purge the harmful substances. Particularly, the carbon material can adsorb aldehyde compounds such as formaldehyde and acetaldehyde in a higher concentration even at room temperature not less than 10°C; at a temperature of not less than 10°C and not more than 25°C, the adsorbing properties are further improved. In order to check that formaldehyde and acetaldehyde are adsorbed by the carbon material, for example, the carbon material and gas of formaldehyde or acetaldehyde are sealed within a commercially available Tedlar Bag, and after a predetermined period of time passes, the concentration of the gas is measured by a gas detecting tube; thereby, quantitative analysis can be performed.

Further, the material for purging harmful substances in the present embodiment includes at least one of the oxidation catalyst and the adsorbent, and can oxidize NO, CO, $NH_3$, or an aromatic hydrocarbon or adsorb $NO_x$ (NO, $NO_2$), formaldehyde, acetaldehyde, and the like to purge the harmful substances.

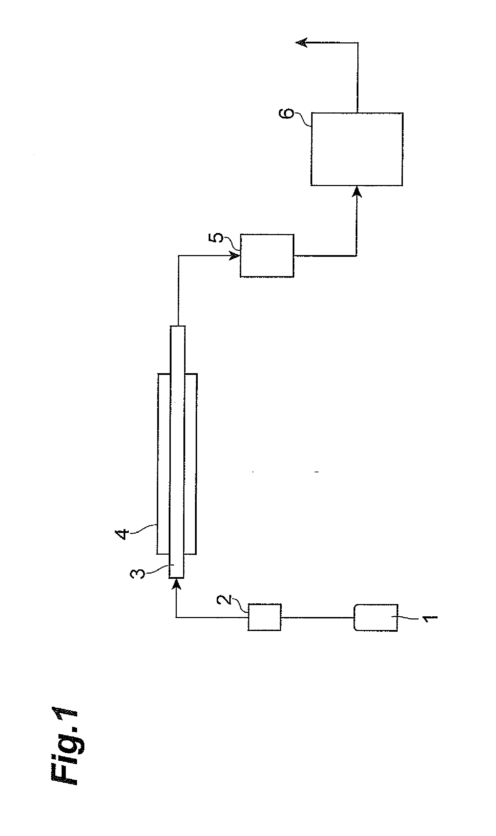

Figure 1 is a schematic view of an apparatus for measuring the concentration of NO, CO, $NH_3$, or an aromatic hydrocarbon. In the measurement apparatus including a reference gas cylinder 1, a mass flow controller 2, a reaction tube 3, a cooler 5, a gas analyzing apparatus 6, and the like, first, the respective gases above are produced from the reference gas cylinder 1, the flow rates of the gases are controlled by the mass flow controller 2, and the gases are introduced into the reaction tube 3. Then, the reaction tube 3 filled with the gases is heated when necessary by an electric heating furnace 4. The respective gases are oxidized by an oxidation catalyst 10 within the reaction tube 3. In the gas after the reaction, steam is evacuated in the cooler 5, and the composition is analyzed by the gas analyzing apparatus 6. The gas analyzing apparatus 6 is a gas chromatograph, for example, and can perform quantitative analysis of $O_2$, CO, $CO_2$, an aromatic hydrocarbon such as toluene, and the like; $NO_x$, NO, $NO_2$ CO, and the like can be quantitatively analyzed by an $NO_x$ analyzer, for example. Moreover, quantitative analysis can be performed on $NH_3$ by

an UV-visible spectrophotometer.

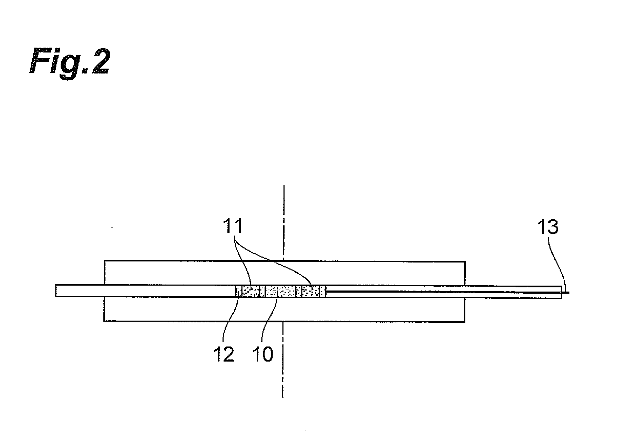

Figure 2 is a schematic view of the reaction tube that is a part of the measurement apparatus. The reaction tube 3 is made of quartz, and it is preferable that the oxidation catalyst 10 is filled into the center of the reaction tube. Additionally, in order for a model gas to be distributed in the portion into which the carbon material is filled, quartz sand 11 or quartz wool 12 can be filled into both sides of the oxidation catalyst 10.

The ability of the oxidation catalyst can be evaluated as a conversion rate of each gas by the following calculation expressions.

$$\text{Conversion rate of NO} = (\text{NO mol flow rate at inlet} - \text{NO mol flow rate at outlet}) / (\text{NO mol flow rate at inlet}) \times 100\%$$

$$\text{Conversion rate of CO} = (\text{CO mol flow rate at inlet} - \text{CO mol flow rate at outlet}) / (\text{CO mol flow rate at inlet}) \times 100\%$$

$$\text{Conversion rate of NH}_3 = (\text{NH}_3 \text{ mol flow rate at inlet} - \text{NH}_3 \text{ mol flow rate at outlet}) / (\text{NH}_3 \text{ mol flow rate at inlet}) \times 100\%$$

$$\text{Conversion rate of aromatic hydrocarbon} = (\text{mol flow rate of aromatic hydrocarbon at inlet} - \text{mol flow rate of aromatic hydrocarbon at outlet}) / (\text{mol flow rate of aromatic hydrocarbon at inlet}) \times 100\%$$

$$\text{Carbon balance} = (\text{total mol flow rate of carbon at outlet} - \text{total mol flow rate of carbon at inlet}) / (\text{total mol flow rate of carbon at inlet}) \times 100\%$$

$$\text{Yield of NO}_2 = (\text{NO}_2 \text{ mol flow rate at outlet}) / (\text{NO mol flow rate at inlet} + \text{NO}_2 \text{ mol flow rate at inlet}) \times 100\%$$

The conversion rate indicates how much NO, CO, NH$_3$, or an aromatic hydrocarbon is oxidized by the oxidation catalyst; a higher conversion rate indicates that NO, CO, NH$_3$, or an aromatic hydrocarbon is more oxidized; if the conversion rate is 100%, it indicates that NO, CO, NH$_3$, or an aromatic hydrocarbon is completely oxidized.

**Examples**

Hereinafter, the present invention will be described according to Examples, but the present invention will not be limited to these Examples.

The carbon material used as the oxidation catalyst or adsorbent in the present Examples was prepared as follows.

First, 1.5 g of polymethacrylic acid was dissolved in 20 g of dimethylformamide. Subsequently, 1.5 g of cobalt oxide (made by Nisshinbo Holdings Inc.), 1.5 g of ε-caprolactam (made by Tokyo Chemical Industry Co., Ltd.), and 1.5 g of an n-butylated melamine resin (product name: U-VAN 21R, Mitsui Chemicals, Inc.) were stirred for 6 hours to obtain a mixed solution. Thus, a precursor composition was obtained. Cobalt oxide was produced according to the method described in WO 2007/049549 by electrodialysis treatment.

Next, the carbonization treatment on the precursor composition was performed. Namely, the precursor composition was placed in a quartz tube, and the quartz tube was nitrogen purged for 50 minutes by a paraboloidal reflection type infrared gold image furnace. Then, heating was started, and the temperature of the gold image furnace was raised at a temperature rising rate of 1°C/min from room temperature to 900°C. Subsequently, the quartz tube was kept at 900°C for 1 hour. Thus, a carbon material produced by carbonizing the precursor composition was obtained.

Further, the powdering treatment of the carbon material was performed. Namely, silicon nitride balls having a diameter of 1.5 cm was set within a planetary ball mill (product name: P-7, Fritsch Japan Co., Ltd.), and the carbon material obtained by the carbonization treatment was powdered at a rotational speed of 800 rpm for 60 minutes. The powdered carbon material was extracted, and classified by a sieve having an opening of 46 μm.

The obtained carbon material was filled into the center of the quartz reaction tube having an inner diameter of 6 mm, and 0.5 g of quartz sand was filled into each side of the carbon material layer for distribution of the gas.

In the analysis of the gas, quantitative analysis of $O_2$, CO, $N_2O$, $CO_2$, a hydrocarbon, an aromatic hydrocarbon such as toluene, and the like was performed by a gas chromatograph (product name: GC-14B, made by Shimadzu Corporation). Moreover, in $NO_x$, NO, $NO_2$, CO, $SO_2$, and the like, quantitative analysis was performed by an $NO_x$ analyzer (product name: PG-250, made by HORIBA, Ltd.). Moreover, in $NH_3$, quantitative analysis was performed by an UV-visible spectrophotometer (product name: V-530, made by JASCO Corporation).

(Example 1)

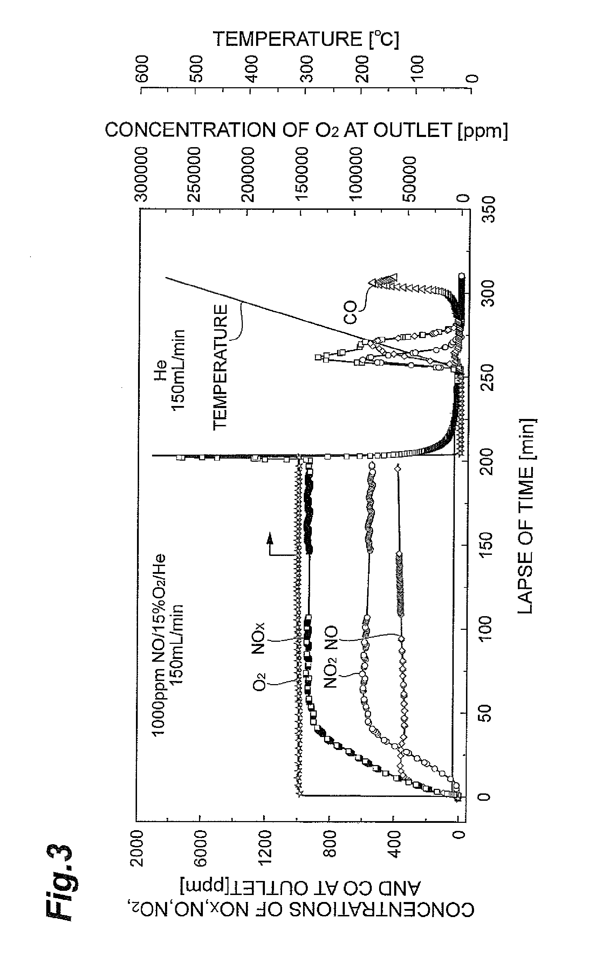

100 mg of the carbon material was placed in the reaction tube, the gas containing NO at 1000 ppm, $O_2$ at 15%, and He was flowed into the reaction tube at 150 mL/min for 3 hours under an environment of room temperature of 25°C, and the concentrations of NO, $NO_2$, and the like were measured. Subsequently, He was flowed at 150 mL/min at 25°C until the concentration of $NO_x$ returned to a level of zero, thereby to clean the reaction tube. Subsequently, the temperature was raised at 10°C/min from 30°C to 600°C, and He was flowed at 150 ml/min. The result is shown in Figure 3, which is obtained by calculating the amount of $NO_x$ adsorbed on the surface of the carbon material by integration calculation using a desorption isotherm.

As shown in Figure 3, the gas reached the saturated state after 75 minutes after the test was started, and the concentration of $NO_2$ was approximately 600 ppm. Namely, at room temperature, 60% of NO was oxidized to $NO_2$ by the carbon material. Moreover, the amount of $NO_x$ adsorbed on the surface of the carbon material was calculated, and it was 748 μmol/g.

(Example 2)

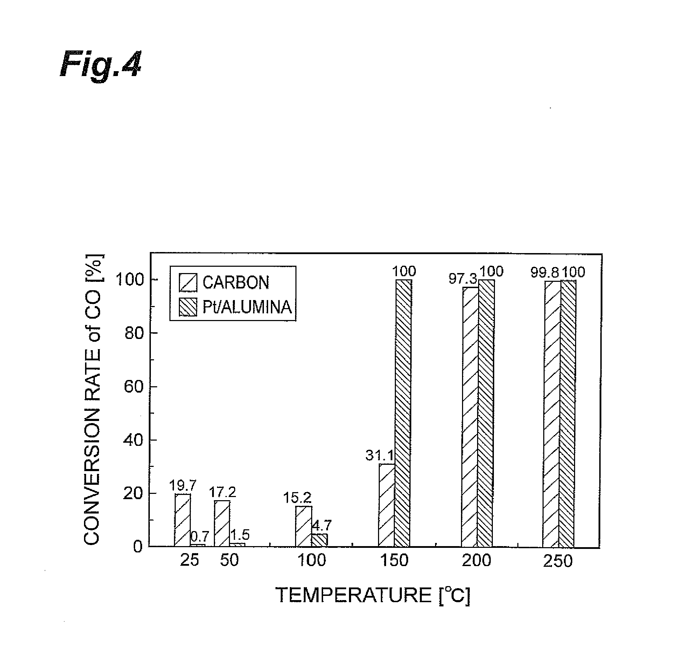

100 mg of the carbon material was placed in the reaction tube, the gas containing CO at 2500 ppm, $O_2$ at15%, and He was flowed into the reaction tube (150 mL/min, space velocity (F/w): 90000 mL/(g·h)), and the conversion rate of CO was measured. The result is shown in Figure 4.

As shown in Figure 4, 19.7% of CO was oxidized to $CO_2$ at 25°C, and 17.2% of CO was oxidized to $CO_x$ at 50°C; an oxidation effect at a low temperature was recognized. At 100°C to 150°C, the conversion rate of CO was 15.2% to 31.1%, while at 200°C, the conversion rate of CO was 97.3%, and at 250°C, the conversion rate of CO was 99.8%, and a high conversion rate of CO was shown.

(Example 3)

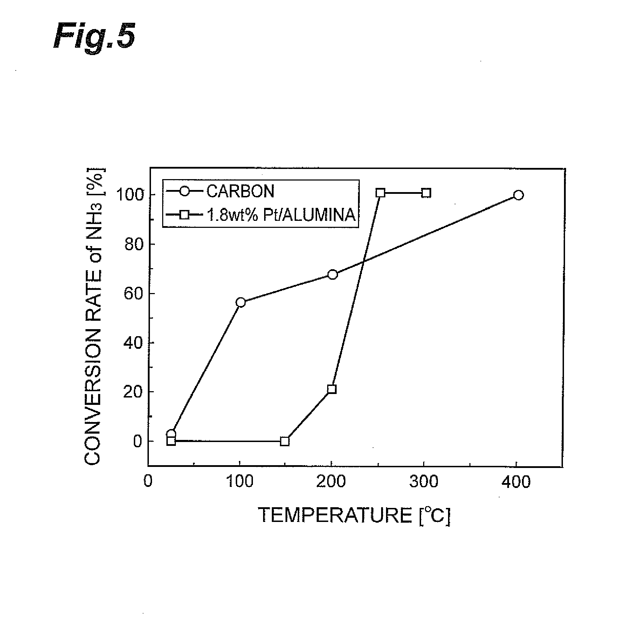

0.1 g of the carbon material was placed in the reaction tube, the gas containing $NH_3$ at 2000 ppm/air was flowed into the reaction tube (200 mL/min, F/w: 120000 mL/(g·h)), and the conversion rate of $NH_3$ was measured. The result is shown in Figure 5.

As shown in Figure 5, oxidation of 5% of $NH_3$ could be confirmed at around 25°C that is normal temperature; at 100°C, the conversion rate of $NH_3$ was shown to be approximately 55%, and at 200°C, the conversion rate of $NH_3$ was shown to be approximately 65%. Almost 100% of $NH_3$ was oxidized at 400°C.

(Example 4)

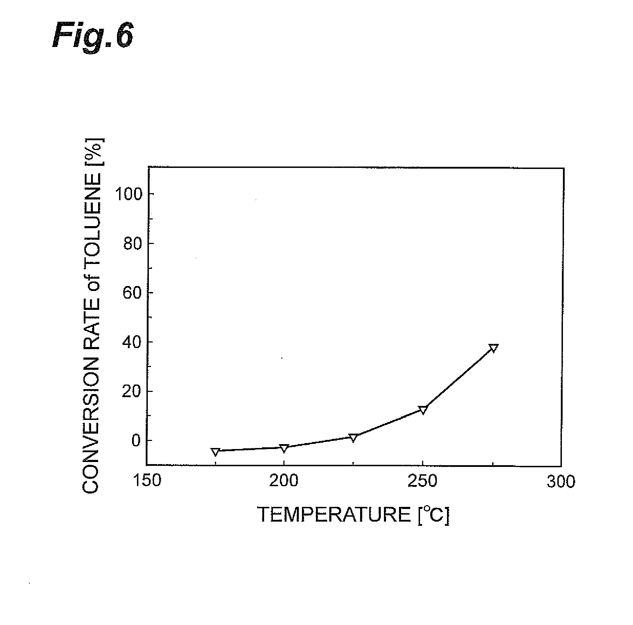

50 mg of the carbon material was placed in the reaction tube, the gas comprising toluene of 500 ppm/air was flowed into the reaction tube (30 mL/min, F/w: 36000 mL/(g·h)), and the conversion rate of toluene was measured. The result is shown in Figure 6.

As shown in Figure 6, toluene was only slightly oxidized at around 175°C, and at 200°C, approximately 3% of toluene was oxidized. Subsequently, as the temperature was elevated, the conversion rate was slightly elevated; at 250°C, the conversion rate was shown to be approximately 17%, and at 275°C, the conversion rate was shown to be approximately 40%.

(Example 5)

30 mg of the carbon material was accommodated in a 3-L Tedlar Bag under an environment of 27°C, and the air in which the concentration of acetaldehyde was 20 ppm was injected into the Tedlar Bag. After 24 hours, the concentration of acetaldehyde within the Tedlar Bag was measured using a gas detecting tube (made by GASTEC Corporation); the concentration of acetaldehyde was 0 ppm, and it was recognized that acetaldehyde within the Tedlar Bag was adsorbed by the carbon material, and removed.

(Example 6)

Measurement was performed in the same manner as in Example 5 except that the air in which the concentration of acetaldehyde was 20 ppm was replaced by the air in which the concentration of formaldehyde was 50 ppm; the concentration of formaldehyde was 0 ppm after 24 hours, and it was recognized that formaldehyde within the Tedlar Bag was adsorbed by the carbon material, and removed.

(Comparative Example 1)

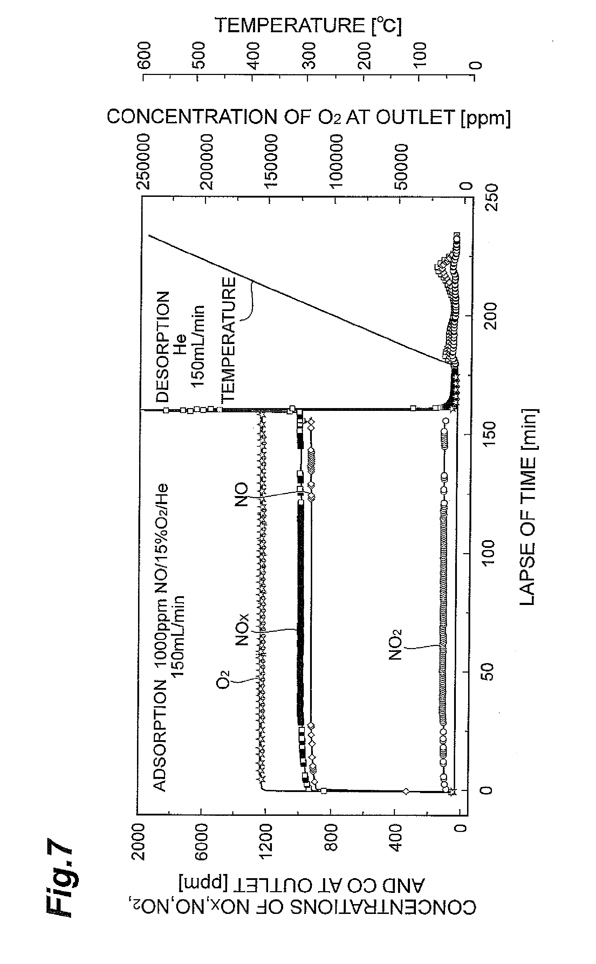

In the same manner as in Example 1, using a commercially available alumina material (made by Soekawa Chemical Co., Ltd.), the concentrations of NO, $NO_2$, and the like and adsorption and desorption behaviors of $NO_x$ were measured. As shown in Figure 7, in the alumina material, only approximately 50 ppm of $NO_2$ was oxidized. Moreover, the amount of $NO_x$ adsorbed on the surface was 117 $\mu$mol/g, which was a small amount compared to the case of the carbon material in Example 1.

(Comparative Example 2)

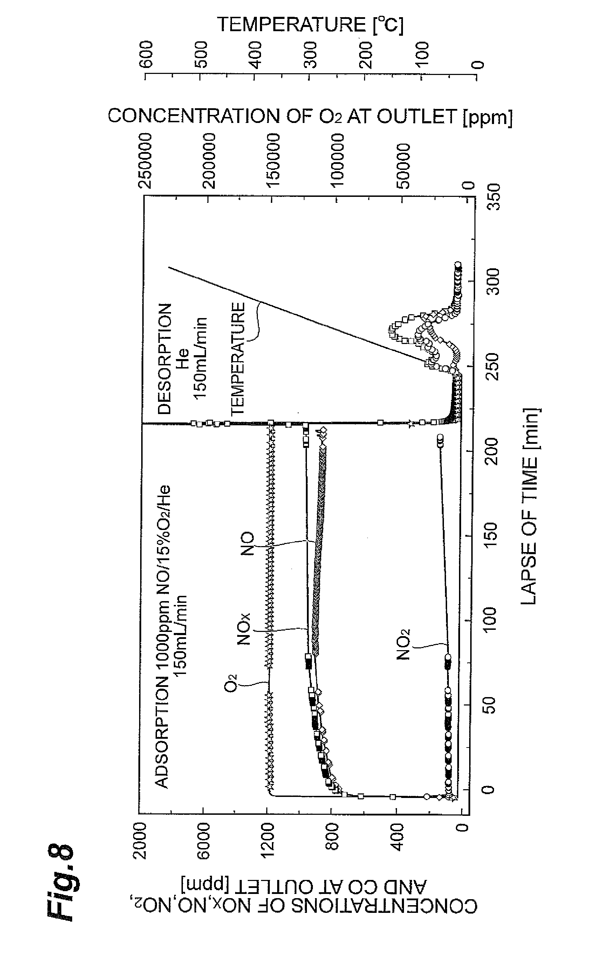

In the same manner as in Example 1, using a Pt/alumina material carrying 2.5% by mass of platinum, the concentrations of NO, $NO_2$, and the like and adsorption and desorption behaviors of $NO_x$ were measured. As shown in Figure 8, in the Pt/alumina material, only 107 ppm of $NO_2$ was oxidized. Moreover, the amount of $NO_x$ adsorbed on the surface was 532 $\mu$mol/g, which was smaller than that in the case of the carbon material in Example 1.

(Comparative Example 3)

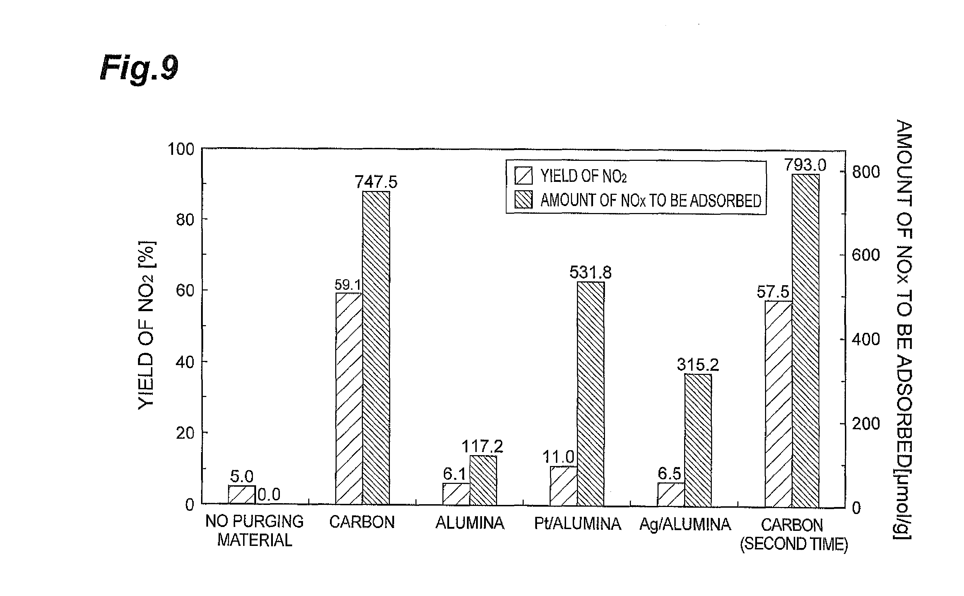

In the same manner as in Example 1, using an Ag/alumina material carrying 1.7% by mass of Ag, the concentrations of NO, $NO_2$, and the like and adsorption and desorption behaviors of $NO_x$ were measured. In the Ag/alumina material, $NO_2$ was only slightly oxidized. Moreover, as shown in Figure 9, the amount of $NO_x$ adsorbed on the surface was approximately 315 $\mu$mol/g, which was smaller than that in the case of the carbon material in Example 1.

(Comparative Example 4)

In the same manner as in Example 1, the concentrations of NO, $NO_2$, and the like and adsorption and desorption behaviors of $NO_x$ in the case where the purging material was not used were measured. In the case where the purging material was not used, $NO_2$ was only slightly oxidized. The yield of $NO_2$ was 5.0% (Figure 9).

(Comparative Example 5)

In the same manner as in Example 2, using a Pt/alumina material carrying 2.5% by mass of platinum, the conversion rate of CO was measured. As shown in Figure 4, in the Pt/alumina material, oxidation of CO was little in a low temperature range up to 100°C. However, at a temperature of not less than 150°C, 100% of CO was oxidized to $CO_2$.

(Comparative Example 6)

In the same manner as in Example 3, using a Pt/alumina material carrying 1.8% by mass of platinum, the

conversion rate of NH$_3$ was measured. As shown in Figure 5, in the Pt/alumina material, oxidation of NH$_3$ was hardly found in the range up to 150°C. However, at a temperature of not less than 250°C, 100% of NH$_3$ was oxidized.

(Comparative Example 7)

Measurement was performed in the same manner as in Example 5 except that instead of the carbon material, steam activated carbon (product name: Shirasagi TC, made by Japan EnviroChemicals, Ltd.) was used; the amount of residual acetaldehyde was 10 ppm, and acetaldehyde could not be completely removed.

(Comparative Example 8)

Measurement was performed in the same manner as in Example 6 except that instead of the carbon material, steam activated carbon (product name: Shirasagi TC, made by Japan EnviroChemicals, Ltd.) was used; the amount of residual formaldehyde was 30 ppm, and formaldehyde could not be completely removed.

**Industrial Applicability**

According to the present invention, an oxidation catalyst that can oxidize harmful substances without using Pt can be provided. Moreover, an adsorbent that can adsorb harmful substances without being subj ected to an activating step as in the case of activated carbon can be provided. Thereby, a purging material that can remove harmful substances can be provided.

**Reference Signs List**

1...reference gas cylinder, 2...mass flow controller, 3...reaction tube, 4...electric heating furnace, 5...cooler, 6...gas analyzing apparatus, 10...oxidation catalyst, 11...quartz sand, 12...quartz wool, 13...thermocouple.

**Claims**

1.  An oxidation catalyst, comprising a carbon material prepared by calcining:

    a transition metal compound and a nitrogen-containing organic substance, or
    a transition metal compound, a nitrogen-containing organic substance, and a carbon compound not containing nitrogen,
    the oxidation catalyst oxidizing at least one target substance selected from the group consisting of NO, CO, NH$_3$, and an aromatic hydrocarbon.

2.  The oxidation catalyst according to claim 1, wherein the target substance is oxidized at a temperature of not less than 10°C.

3.  The oxidation catalyst according to claim 1, wherein the target substance is an aromatic hydrocarbon, and the aromatic hydrocarbon is oxidized at a temperature of not less than 200°C.

4.  The oxidation catalyst according to any one of claims 1 to 3, wherein at least one load material selected from the group consisting of Pd, Rh, Ru, Ni, Co, Fe, Ce, Cu, Ti, Zr, Sn, V, Nb, Ta, Cr, Mo, W, Bi, Mn, and compounds thereof is supported on the carbon material.

5.  An adsorbent, comprising a carbon material prepared by calcining:

    a transition metal compound and a nitrogen-containing organic substance, or
    a transition metal compound, a nitrogen-containing organic substance, and a carbon compound not containing nitrogen,
    the adsorbent adsorbing at least one target substance selected from the group consisting of NO, NO$_2$, formaldehyde, and acetaldehyde.

6.  The adsorbent according to claim 5, wherein the target substance is adsorbed at a temperature of not less than 10°C.

7. A material for purging harmful substances, comprising at least one of the oxidation catalyst according to any one of claims 1 to 4 and the adsorbent according to claim 5 or 6.

Fig.1

Fig.2

**Fig.3**

EP 2 450 102 A1

# Fig.4

*Fig.5*

# Fig.6

## Fig.7

**Fig.8**

Fig.9

| **INTERNATIONAL SEARCH REPORT** | International application No. |
|---|---|
| | PCT/JP2010/059125 |

**A.  CLASSIFICATION OF SUBJECT MATTER**
*B01J23/75*(2006.01)i, *A61L9/00*(2006.01)i, *A61L9/01*(2006.01)i, *A61L9/16*
(2006.01)i, *B01D53/86*(2006.01)i, *B01D53/94*(2006.01)i, *B01J20/20*(2006.01)i

According to International Patent Classification (IPC) or to both national classification and IPC

**B.  FIELDS SEARCHED**

Minimum documentation searched (classification system followed by classification symbols)
B01J23/75, A61L9/00, A61L9/01, A61L9/16, B01D53/86, B01D53/94, B01J20/20

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus/JMEDPlus/JST7580(JDreamII)

**C.  DOCUMENTS CONSIDERED TO BE RELEVANT**

| Category* | Citation of document, with indication, where appropriate, of the relevant passages | Relevant to claim No. |
|---|---|---|
| A | JP 2007-026746 A  (National University Corporation Gunma University), 01 February 2007 (01.02.2007), claims; examples (Family: none) | 1-7 |
| A | Atsuya FURUICHI et al., "Kinzoku Dope Tanso no Chosei to Sanso Kangen Kassei", Abstracts of 30th Annual Meeting of the Carbon Society of Japan, 04 December 2003 (04.12.2003), pages 30 to 31 | 1-7 |
| A | JP 2007-207662 A  (National University Corporation Gunma University), 16 August 2007 (16.08.2007), claims; examples (Family: none) | 1-7 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August, 2010 (10.08.10) | 24 August, 2010 (24.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/059125

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2008-282725 A   (National University Corporation Gunma University), 20 November 2008 (20.11.2008), claims; examples (Family: none) | 1-7 |
| A | H.NIWA et al., X-ray absorption analysis of nitrogen contribution to oxygen reduction reaction in carbon alloy cathode catalysts for polymer electrolyte fuel cells, Journal of Power Sources, 2009.02.01, Vol.187, No.1, pp.93-97 | 1-7 |
| A | JP 57-118009 A   (Kanebo, Ltd.), 22 July 1982 (22.07.1982), claims; page 5, upper right column, line 19 to lower left column, line 9; page 5, lower right column, lines 12 to 16; examples (Family: none) | 1-7 |
| A | JP 2005-125300 A   (Michio UEMURA), 19 May 2005 (19.05.2005), entire text (Family: none) | 1-7 |
| A | Noriko YOSHIZAWA et al., "Dispersion Properties of Metal Oxide Nanoparticles Supported in Mesoporous Activated Carbons", Tanso, 1998.02, no.181, pages 8 to 13 | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006055747 A
- JP 2004362802 A
- WO 2007049549 A